(19) Europäisches Patentamt
European Patent Office
Office européen des brevets

(11) Veröffentlichungsnummer: **0 055 223**
**A2**

(12) # EUROPÄISCHE PATENTANMELDUNG

(21) Anmeldenummer: **81810510.8**

(22) Anmeldetag: **21.12.81**

(51) Int. Cl.³: **C 09 B 19/00,** C 09 B 69/06, D 01 F 1/06

(30) Priorität: **24.12.80 CH 9574/80**

(43) Veröffentlichungstag der Anmeldung: **30.06.82 Patentblatt 82/26**

(84) Benannte Vertragsstaaten: **CH DE FR GB IT LI**

(71) Anmelder: **CIBA-GEIGY AG, Patentabteilung Postfach, CH-4002 Basel (CH)**

(72) Erfinder: **Loew, Peter, Dr., Concordiastrasse 23, CH-4142 Münchenstein (CH)**

(54) **Farbsalze basischer Oxazinfarbstoffe.**

(57) Farbsalze der Formel

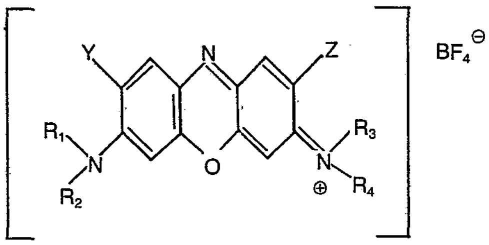

worin $R_1$ und $R_4$ H oder Alkyl, $R_2$ und $R_3$ H, Alkyl, Aralkyl oder Aryl, Y und Z H, Halogen, Alkyl, Alkoxy oder Aryloxy bedeuten. Die Farbsalze eignen sich vorzüglich für die Spinnfärbung von Polyacrylnitril. Man erhält reinblau gefärbte transparente Fasern mit ausgezeichneter Echtheit.

EP 0 055 223 A2

CIBA-GEIGY AG
Basel (Schweiz)

3-13227/=

Farbsalze basischer Oxazinfarbstoffe

Es ist bekannt, dass die Salze basischer Oxazinfarbstoffe beispielsweise die Chloride, Sulfate, Phosphate, Acetate oder Benzoate sich vorzüglich zum Färben von Polyacrylnitril aus wässerigem Bade eignen (siehe z.B. DE-PS 1 031 272). Für die Spinnfärbung von Polyacrylnitril ist die Verwendung dieser Salze jedoch mit erheblichen Nachteilen verbunden.

Es wurde nun gefunden, dass sich die Tetrafluorborate kationischer Oxazinfarbstoffe der Formel

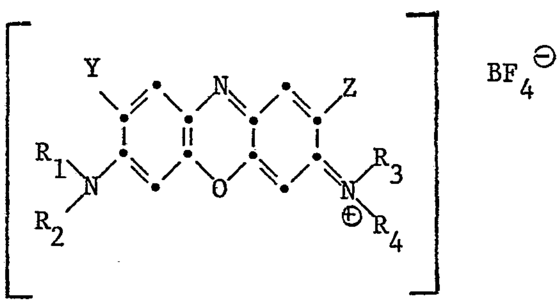

worin $R_1$ und $R_4$ H oder Alkyl, $R_2$ und $R_3$ H, Alkyl, Aralkyl oder Aryl, Y und Z H, Halogen, Alkyl, Alkoxy oder Aryloxy bedeuten, hervorragend zur Spinnfärbung von Polymeren des Acrylnitrils oder Mischpolymeren mit überwiegendem Acrylnitrilanteil eignen.

Bevorzugt sind jene Farbsalze der Formel (I), worin $R_1$ und $R_4$ H oder $C_1$-$C_4$-Alkyl, $R_2$ und $R_3$ H, $C_1$-$C_4$-Alkyl, oder gegebenenfalls durch Chlor, Methyl oder $C_1$-$C_2$-Alkoxy substituiertes Phenyl, Y und Z H, Methyl, $C_1$-$C_2$-Alkoxy bedeuten, und insbesondere jene, worin $R_1$ und $R_4$ H, $R_2$ H, $C_1$-$C_4$-Alkyl, $R_3$ gegebenenfalls durch Methyl substituiertes Phenyl, Y und Z H bedeuten.
Die neuen Farbsalze erhält man zweckmässig durch Umsetzen eines Farbsalzes der Formel

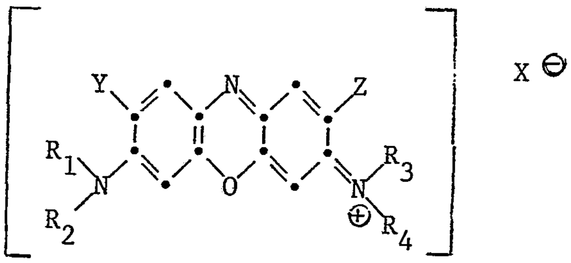

worin X ein wasserlöslichmachendes Anion bedeutet, in wässriger Lösung mit $NaBF_4$. Als wasserlöslichmachende Anionen dienen vorzugsweise die Chloride, Bromide, Sulfate, Methylsulfate oder Acetate. Dank ihrer Schwerlöslichkeit fallen die Tetrafluorborate aus. Die Ausgangssalze stellen bekannte Verbindungen dar.

Für die Anwendung werden die erfindungsgemässen Farbsalze zweckmässig in dem zum Lösen des Polyacrylnitrils verwendeten Lösungsmittel, wie Dimethylformamid, Dimethylacetamid oder Dimethylsulfoxid, gelöst, dann der Spinnlösung zugegeben, das Gemisch homogenisiert und dann in der üblichen Weise, wie beispielsweise nach dem Trocken-Spinnverfahren, oder nach dem Nass-Spinn-Verfahren, verspinnt und die so hergestellten Fasern wie üblich behandelt.

Die erfindungsgemässen Farbsalze besitzen in den genannten Lösungsmitteln bereits bei Raumtemperatur eine sehr hohe Löslichkeit, so dass sie vorteilhaft auch in Form von konzentrierten Lösungen, die vorzugsweise etwa 5 bis 20 Gew.% Farbstoff enthalten, eingesetzt werden können, wobei durch Temperaturerhöhung die Löslichkeit der Farbstoffe nochmals beträchtlich gesteigert werden kann. Zudem besitzen sie dank des relativ kleinen Anions eine hohe Farbstärke, was ein ökonomisches Färben erlaubt.

Ausser den Polymeren des Acrylnitrils kommen als zu verspinnendes Substrat Mischpolymerisate des Acrylnitrils mit anderen Vinyl-Verbindungen, wie beispielsweise mit Vinylchlorid, Vinylfluorid, Vinylidenchlorid, Vinylacetat oder -propionat, Vinylpyridin, Vinylimidazol, Vinylpyrrolidon, Vinylalkohol, Acryl- oder Methacrylsäureestern oder Acrylamiden in Betracht, wobei diese Mischpolymerisate mindestens 70 Gew.% an Acrylnitril aufweisen müssen und weiterhin saure Gruppen enthalten, die als Endgruppen in das Polymere mittels eines Katalysators eingeführt oder mittels solche saure Gruppen enthaltenden Comonomeren einpolymerisiert oder aufgepfropft wurden.

Nach dem erfindungsgemässen Verfahren erhält man völlig transparente, stippenfreie Spinnlösungen, die keine Verstopfung oder mechanische Abnutzung der Spinndüsen verursachen. Die beim Verspinnen erhaltenen Fäden bzw. Fasern zeigen durch die weitgehend molekulardisperse Verteilung des erfindungsgemäss verwendeten Farbstoffes im Gegensatz zu den zur Zeit meistens eingesetzten Farbpigmenten keine Mattierungserscheinungen. Weiterhin besitzen die mit dem erfindungsgemäss verwendeten Farbstoffe gemäss dem erfindungsgemässen Verfahren gefärbten Materialien eine sehr hohe Nassechtheit. Durch das Fehlen von Farbstoff-Aggregaten an den Faseroberflächen, wie sie beim Spinnfärben mit Farbpigmenten auftreten können, besitzen die erfindungsgemäss erhaltenen Fasern ebenfalls eine ausserordentlich gute Reibechtheit. Ausserdem ist allgemein die ausgezeichnete Thermofixierechtheit, Dämpf- und Wasch- und Lichtechtheit der so gefärbten Fasern hervorzuheben.

Da die erfindungsgemäss verwendeten Tetrafluorborat-Farbstoffsalze sich aus den wässrigen Lösungen wie sie bei der Farbstoffsynthese entstehen sehr gut in grobkristalliner Form und weitgehend salzfrei abscheiden lassen, hat die Verwendung von Spinnlösungen, die diese Farbstoffe enthalten, den besonderen Vorteil, dass anorganische Begleitsalze in den als Spinnflüssigkeit verwendeten aprotischen Lösungsmitteln vor dem Verspinnen nicht erst abgetrennt werden müssen, so dass insbesondere zusätzliche verfahrenstechnische Massnahmen vermieden werden. Die ausserordentlich geringe Wasserlöslichkeit der erfindungsgemässen Farbsalze ist ein weiterer Vorteil im Hinblick auf das Ausbluten des Farbsalzes im wässrigen Fällbad.

Beispiel 1: 40 g des Farbstoffes der Formel (X=Cl)

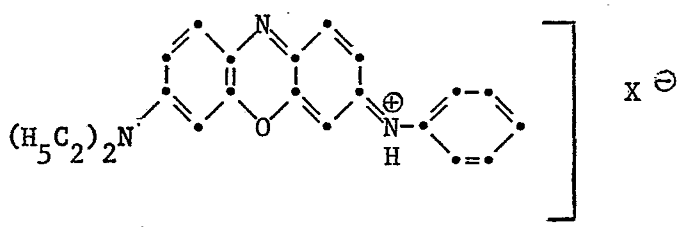

werden in 800 ml wässriger Essigsäure gelöst und mit einer Lösung von 12 g Natriumtetrafluorborat in 50 ml Wasser versetzt. Der ausgefallene Farbstoff ($X=BF_4$) wird abfiltriert, gut mit Wasser gewaschen und getrocknet. Man erhält 35 g eines dunklen Farbstoffpulvers, welches PAN in der Spinnmasse in einem reinen Blauton färbt.

Beispiele 2-9: In der nachfolgenden Tabelle sind weitere Farbsalze aufgeführt, die man erhält, wenn man nach den Angaben des Beispiels 1 das in Kolonne 2 der nachfolgenden erwähnten Farbsalze mit Natriumtetrafluorborat umsetzt. Auch mit diesen Farbsalzen erhält man reine blaue Spinnfärbungen.

Tabelle

| Bsp. | Kation | Anion |
|---|---|---|
| 2 | 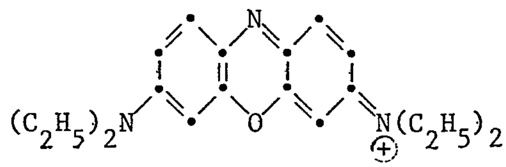 | $Cl^{\ominus}$ |
| 3 | 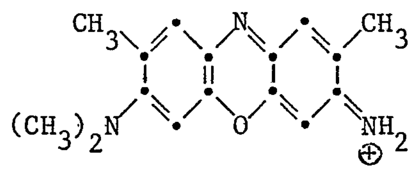 | $Cl^{\ominus}$ |
| 4 | 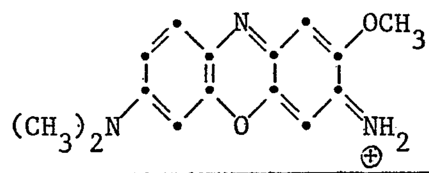 | $Cl^{\ominus}$ |
| 5 | 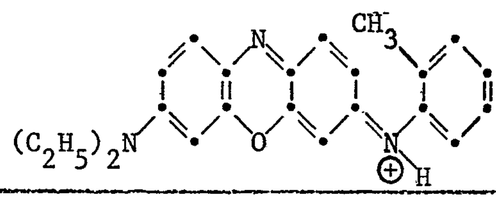 | $Br^{\ominus}$ |
| 6 | 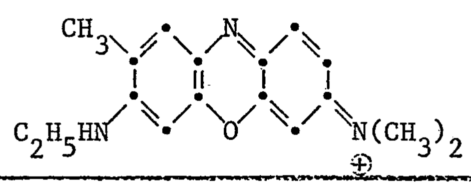 | $CH_3COO^{\ominus}$ |
| 7 | 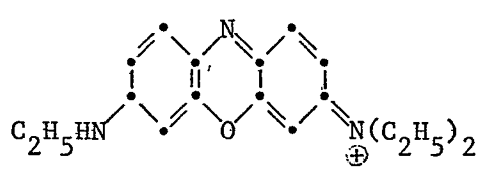 | $CH_3COO^{\ominus}$ |
| 8 | 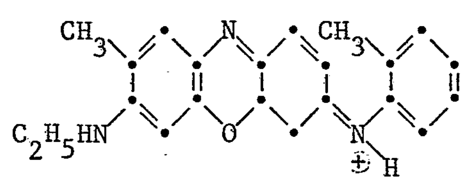 | $Cl^{\ominus}$ |
| 9 | 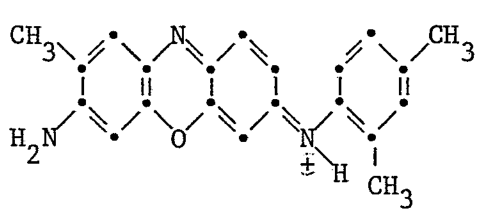 | $CH_3COO^{\ominus}$ |

Beispiel 10: Zu 100 Teilen einer 30%igen Lösung eines sauermodifizierten Polyacrylnitrils in Dimethylformamid werden 5 Teile einer 5%igen Lösung des gemäss Beispiel 1 erhaltenen Farbsalzes in Dimethylformamid gegeben. Die zu verspinnende Lösung wird homogenisiert und nach einem in der Technik üblichen und bekannten Trockenspinnverfahren versponnen.

Man erhält Fäden in einem kräftigen Blauton, welche sich zusätzlich durch einen hohen Glanz auszeichnen. Die Echtheiten, insbesondere die Lichtechtheit, Reibechtheit, Thermofixierechtheit, Waschechtheit und Dämpfechtheit sind auserordentlich hoch.

Führt man die Faserherstellung nach einem in der Technik üblichen Nass-Spinnverfahren durch, erhält man gefärbte Fäden von gleich guten Eigenschaften. Die Fäll- und Verstreckbäder werden nur äusserst geringfügig angefärbt.

Verwendet man anstelle des obengenannten Farbstoffes die in den Beispielen 2-9 der Tabelle aufgeführten Farbstoffe, so erhält man gleichfalls kräftige Blaufärbungen mit hohen Echtheiten.

Patentansprüche

1. Farbsalze der Formel

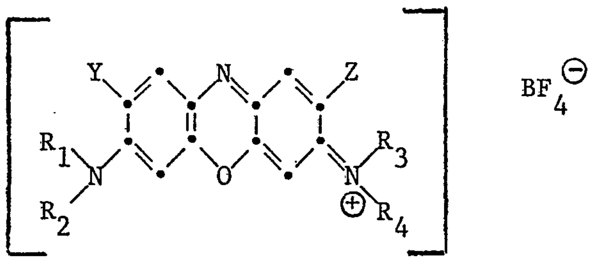

worin $R_1$ und $R_4$ H oder Alkyl, $R_2$ und $R_3$ H, Alkyl, Aralkyl oder Aryl, Y und Z H, Halogen, Alkyl, Alkoxy oder Aryloxy bedeuten.

2. Farbsalze gemäss Anspruch 1, worin $R_1$ und $R_4$ H oder $C_1$-$C_4$-Alkyl, $R_2$ und $R_3$ H, $C_1$-$C_4$-Alkyl oder gegebenenfalls durch Chlor, Methyl oder $C_1$-$C_2$-Alkoxy substituiertes Phenyl, Y und Z H, Methyl oder $C_1$-$C_2$-Alkoxy bedeuten.

3. Farbsalze gemäss Anspruch 1, worin $R_1$ und $R_4$ H, $R_2$ H, $C_1$-$C_4$Alkyl, $R_3$ gegebenenfalls durch Methyl substituiertes Phenyl, Y und Z H bedeuten.

4. Verfahren zur Herstellung von Farbsalzen gemäss Anspruch 1, dadurch gekennzeichnet, dass man ein Farbsalz der Formel

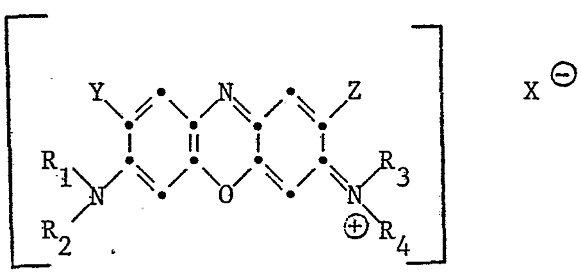

worin X ein wasserlöslichmachendes Anion bedeutet, in wässriger Lösung mit Natriumtetrafluorborat umsetzt.

5. Verfahren zum Spinnfärben von Polymeren des Acrylnitrils oder Mischpolymeren mit überwiegendem Acrylnitrilanteil, dadurch gekennzeichnet, dass man der Spinnlösung ein Farbsalz gemäss Anspruch 1 zusetzt.

6. Spinngefärbte Fasern von Polymeren des Acrylnitrils oder Mischpolymeren mit überwiegendem Acrylnitrilanteil, enthaltend ein Farbsalz gemäss Anspruch 1.